(19) Europäisches Patentamt / European Patent Office / Office européen des brevets

(11) **EP 3 048 503 B1**

(12) **FASCICULE DE BREVET EUROPEEN**

(45) Date de publication et mention de la délivrance du brevet:
**04.09.2019 Bulletin 2019/36**

(51) Int Cl.:
**G05D 1/06** (2006.01)     **G05D 1/10** (2006.01)
**G08G 5/04** (2006.01)

(21) Numéro de dépôt: **16152823.7**

(22) Date de dépôt: **26.01.2016**

(54) **PROCÉDÉ D'ÉVITEMENT D'UN OU PLUSIEURS OBSTACLES PAR UN AÉRONEF, PRODUIT PROGRAMME D'ORDINATEUR, SYSTÈME ÉLECTRONIQUE ET AÉRONEF ASSOCIÉS**

VERFAHREN ZUM VERMEIDEN EINES ODER MEHRERER HINDERNISSE DURCH EIN LUFTFAHRZEUG, ENTSPRECHENDES COMPUTERPROGRAMMPRODUKT UND ENTSPRECHENDES LUFTFAHRZEUG

METHOD FOR AVOIDANCE OF ONE OR MORE OBSTACLES BY AN AIRCRAFT, RELATED COMPUTER PROGRAM PRODUCT, ELECTRONIC SYSTEM AND AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.01.2015 FR 1500144**

(43) Date de publication de la demande:
**27.07.2016 Bulletin 2016/30**

(60) Demande divisionnaire:
**19178483.4**

(73) Titulaire: **THALES**
**92400 Courbevoie (FR)**

(72) Inventeurs:
• **HUBER, Daniel**
  **31036 TOULOUSE (FR)**
• **COLONNA, François**
  **31036 TOULOUSE (FR)**
• **RUEFF, Xavier**
  **31036 TOULOUSE (FR)**

(74) Mandataire: **Lavoix**
  **2, place d'Estienne d'Orves**
  **75441 Paris Cedex 09 (FR)**

(56) Documents cités:
**EP-A1- 0 802 469     DE-A1-102010 031 780**
**FR-A1- 2 876 483     FR-A1- 2 938 683**
**US-A- 4 924 401**

• **T. Sharma ET AL: "Optimal three dimensional aircraft terrain following and collision avoidance", ANZIAM Journal, vol. 48, 26 June 2007 (2007-06-26), pages 695-8735, XP055550014, DOI: 10.21914/anziamj.v47i0.1071**
• **Perfectlogic Corporation: "Flight Dynamics - Closed-loop control model", , 29 September 2012 (2012-09-29), XP055550072, Retrieved from the Internet: URL:https://web.archive.org/web/2012092904 1507/http://www.perfectlogic.com/articles/ Avionics/FlightDynamics/FlightPart4.html [retrieved on 2019-01-31]**

## Description

La présente invention concerne un procédé et un système électronique d'évitement d'un ou plusieurs obstacles par un aéronef, tel qu'un aéronef à voilure tournante. Elle trouve notamment une application dans le domaine des systèmes de conduite de vol et le guidage d'un aéronef lorsqu'un risque de collision, sans perte de contrôle, avec le terrain ou un obstacle est identifié par un système de surveillance.

On connaît de multiples systèmes de guidage permettant de mener à bien un vol en diminuant les risques et en réduisant la charge de travail pour l'équipage.

Pour accroître d'avantage la sécurité, on utilise des systèmes capables d'anticiper les risques de collision et de générer des alertes. On peut citer par exemple les systèmes de type TAWS (« Terrain Awareness and Warning System ») ou HTAWS (« Helicopter Terrain Awareness and Warning System ») et GPWS (« Ground Proximity Warning System ») ou eGPWS (« enhanced Ground Proximity Warning System »), qui peuvent fournir à l'équipage des alertes traduisant l'imminence d'une collision avec le terrain ou un obstacle.

L'utilisation de ces systèmes requiert généralement la déconnexion des systèmes de guidage automatique puis un pilotage manuel de l'aéronef par l'équipage pour réaliser la manoeuvre d'évitement, avec en conséquence une charge de travail accrue pour l'équipage pendant la manoeuvre.

Par ailleurs, ces systèmes nécessitent un entraînement spécifique pour les équipages. Malgré cet entraînement, l'exécution manuelle de la manoeuvre d'évitement par l'équipage peut s'avérer inadéquate, par exemple surdimensionnée ou sous-dimensionnée. L'appréhension même de la situation réelle par l'équipage peut être difficile et la manoeuvre d'évitement retardée, inappropriée, voire même absente.

Des erreurs humaines peuvent donc subsister dans la compréhension de la situation puis dans l'exécution de la manoeuvre, qui entraînent une réduction des marges de sécurité et, dans certains cas, des collisions.

On connaît du document EP 1 859 428 B1 un procédé et un système d'évitement d'obstacle pour un avion de transport qui, lorsque le système d'alerte détecte un risque de collision et émet une alarme, réalise d'emblée une manoeuvre d'évitement automatique.

Le document FR 2 938 683 décrit un procédé et un système d'évitement de terrain pour un aéronef dans lequel la manoeuvre d'évitement est mise en oeuvre systématiquement lorsque deux alertes surviennent simultanément et lorsqu'au moins une de ces deux alertes est émise en continu pendant au moins un seuil de durée prédéterminé.

Ces solutions présentent notamment l'inconvénient de laisser l'équipage en dehors de la boucle de décision. Ainsi, à la difficulté d'appréhender la situation liée au risque de collision s'ajoute la surprise d'une manoeuvre automatique non sollicitée. C'est tout particulièrement le cas avec des aéronefs à voilure tournante qui sont fréquemment amenés à voler près du relief et pour lesquels une prise de contrôle d'emblée entièrement automatique n'est pas appropriée.

L'invention a donc pour objectif de résoudre notamment les problèmes précités, en proposant un procédé et un système d'évitement d'obstacle offrant à l'équipage d'un aéronef une aide au pilotage de la manoeuvre d'évitement, sans systématiquement basculer vers un mode dans lequel la manoeuvre d'évitement est réalisée automatiquement.

Ainsi, l'invention a pour objet, selon un premier aspect, un procédé d'évitement selon la revendication 1.

Suivant certains modes de mise en oeuvre, le procédé est selon l'une quelconque des revendications 2 à 9.

L'invention a également pour objet, selon un deuxième aspect, un produit programme d'ordinateur selon la revendication 10.

L'invention a encore pour objet, selon un troisième aspect, un système électronique d'évitement selon la revendication 11.

Suivant un mode de réalisation, le système est selon la revendication 12.

L'invention a encore pour objet, selon un quatrième aspect, un aéronef selon la revendication 13.

Le procédé et le système de l'invention permettent donc de laisser dans un premier temps l'initiative à l'équipage, en cas d'alertes prédictives émises par le système d'alerte, pour une réponse graduée à ces alertes.

En dernier recours, si l'équipage ne réagit pas, et si un dispositif de pilotage automatique est couplé, une manoeuvre d'évitement automatique est engagée, sur la base de commandes calculées qui, appliquées à l'aéronef, permettent une manoeuvre d'évitement adaptée au degré d'alerte.

Eventuellement, si un dispositif de pilotage automatique n'est pas couplé, les commandes calculées sont présentées à l'équipage pour réalisation manuelle de la manoeuvre.

Ainsi, le procédé et le système de l'invention offrent à l'équipage les possibilités suivantes :

- ne pas utiliser l'aide et apporter une autre réponse, ou
- utiliser l'aide au pilotage manuel pour une manoeuvre d'évitement adaptée au degré d'alerte, ou
- utiliser le guidage automatique pour une manoeuvre d'évitement adaptée au degré d'alerte,

tout en garantissant qu'en cas d'absence de décision de l'équipage, la manoeuvre d'évitement calculée soit engagée automatiquement.

La sécurité s'en trouve améliorée, avec une charge de travail pour l'équipage qui diminue et un confort de pilotage accru.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un aéronef selon l'invention, l'aéronef comprenant un système d'alerte apte à générer des alertes notamment en fonction de la proximité avec un ou plusieurs obstacles de terrain, des capteurs de mesure de vitesse et d'accélération, des organes de commande de vol, un dispositif de pilotage automatique, un dispositif d'affichage de données et un système électronique d'évitement du ou des obstacles,

- la figure 2 est un ensemble de courbes représentant différentes puissances relatives à l'aéronef, ainsi que la puissance totale requise par l'aéronef pour voler,

- la figure 3 est un organigramme d'un procédé, selon l'invention, d'évitement du ou des obstacles, le procédé étant mis en oeuvre par le système d'évitement de la figure 1.

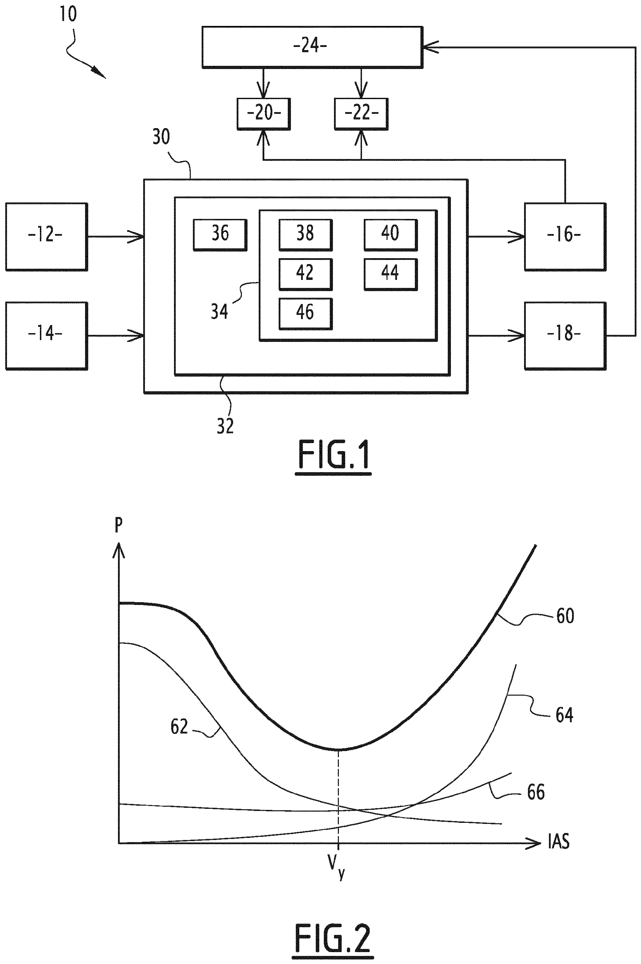

Sur la figure 1 est représenté schématiquement un aéronef 10, tel qu'un aéronef à voilure tournante, comprenant un système d'alerte 12 apte à générer des alertes en fonction notamment de la proximité d'un ou plusieurs obstacles, qui peuvent être par exemple des obstacles de terrain liés au relief de ce terrain.

L'aéronef 10 comprend également un ensemble de capteurs 14 apte à mesurer des informations liées à l'aéronef 10, telles que des vitesses et des accélérations de l'aéronef 10.

L'aéronef 10 comprend encore un dispositif 16 de pilotage automatique, et un dispositif d'affichage de données 18, tel qu'un écran 18.

Par ailleurs, l'aéronef 10 comprend un premier manche 20 et un deuxième manche 22, formant chacun un organe primaire de commande apte à être manipulé par l'équipage 24 de l'aéronef 10 pour son pilotage.

Selon l'invention, l'aéronef 10 comprend en outre un système électronique d'évitement 30 du ou des obstacles par l'aéronef 10.

Le système d'alerte 12, par exemple de type TAWS, est connu en soi, et est adapté pour générer des alertes en cas de rapprochement de l'aéronef avec le relief du terrain.

En cas d'émission d'une alerte par le système d'alerte 12, ce système d'alerte 12 fournit au système électronique d'évitement 30 des informations sur le type d'alerte. Ces informations peuvent éventuellement être complétées par des informations de contrainte de vol, des informations relatives à l'état courant de l'aéronef, et des informations moteur, qui peuvent provenir du système d'alerte 12 lui-même, d'un autre système adapté, des capteurs 14.

Le système électronique d'évitement 30 est alors apte à déterminer une loi de guidage d'évitement d'obstacle, par détermination d'une ou plusieurs consignes de vitesse et/ou de cap, et calcul de la loi de guidage en fonction de ces consignes.

L'ensemble de capteurs 14 est adapté pour mesurer des vitesses et des accélérations de l'aéronef 10, notamment une vitesse verticale VZ et une accélération verticale AZ selon une direction verticale Z, c'est-à-dire une direction normale à la surface terrestre, ou encore une direction passant sensiblement par le centre du globe terrestre. Par la suite, la vitesse verticale mesurée et l'accélération verticale mesurée, correspondant respectivement à la vitesse verticale courante de l'aéronef 10 et à l'accélération verticale courante de l'aéronef 10, sont respectivement notées VZ_mes et AZ_mes.

L'homme du métier comprendra bien entendu que l'invention s'applique de manière analogue au cas où on utiliserait la pente, également notée FPA plutôt que la vitesse verticale VZ, sachant que le passage d'une grandeur à l'autre s'effectue à l'aide de l'équation suivante :

$$FPA = \tan\left(\frac{VZ}{VX}\right) \tag{1}$$

où VX représente une vitesse longitudinale selon une direction longitudinale X perpendiculaire à la direction verticale Z.

L'ensemble de capteurs 14 est également adapté pour mesurer une vitesse air indiquée ou une vitesse sol, la vitesse air ou vitesse sol mesurée pour l'aéronef 10 correspondant à la vitesse air ou sol courante de l'aéronef 10.

La vitesse air indiquée est généralement notée IAS (pour « Indicated Air Speed »). Par convention et pour simplifier, dans la suite de la description, on utilisera également l'acronyme IAS pour la vitesse sol.

De la même façon, la vitesse air mesurée est notée IAS_mes, et l'on utilisera cette notation également pour désigner la vitesse sol mesurée.

Ainsi, dans la suite de la description, la vitesse air ou sol correspondra par convention à la vitesse air indiquée IAS.

L'homme du métier comprendra bien entendu que l'invention s'applique de manière analogue au cas où la vitesse air mesurée est la vitesse air conventionnelle, ou encore la vitesse air vraie, ou encore au MACH.

La vitesse air ou sol IAS comporte une composante verticale selon la direction verticale Z et une composante longitudinale selon la direction longitudinale X perpendiculaire à la direction verticale Z.

L'ensemble de capteurs 14 est également adapté pour mesurer une accélération longitudinale AX de l'aéronef 10 selon la direction longitudinale X, l'accélération longitudinale mesurée étant notée AX_mesurée.

Le dispositif de pilotage automatique 16 est connu en soi, et permet, lorsqu'il est activé, d'agir automatiquement sur la trajectoire de l'aéronef 10, en l'absence d'une manipulation de l'un des organes primaires de commande 20, 22 par l'équipage 24 de l'aéronef.

D'une façon générale, sur un aéronef 10 à voilure tournante, le dispositif de pilotage automatique 16 est toujours engagé et réalise une stabilisation de base.

Par ailleurs, un mode de guidage automatique peut exister, permettant de guider l'aéronef 10 selon une loi de guidage déterminée.

Lorsqu'un tel mode de guidage automatique existe, on dit que ce mode de guidage automatique est couplé au dispositif de pilotage automatique 16 (ou que le dispositif de pilotage automatique 16 est couplé au mode de guidage automatique) lorsque ce mode de guidage automatique est engagé, ou activé, et transmet ses commandes au dispositif de pilotage automatique 16.

Au contraire, on dit qu'un tel mode de guidage automatique n'est pas couplé au dispositif de pilotage automatique 16 (ou que le dispositif de pilotage automatique 16 n'est pas couplé au mode de guidage automatique) lorsque ce mode de guidage automatique est engagé, ou activé, mais ne transmet pas ses commandes au dispositif de pilotage automatique 16.

L'écran d'affichage 18 est apte à afficher des données, notamment des données issues du système d'électronique d'évitement 30, pour fournir une aide au pilotage à l'équipage 24 de l'aéronef.

Dans l'exemple de réalisation de la figure 1, l'écran d'affichage 18 est distinct du système d'électronique d'évitement 30. En variante non représentée, l'écran d'affichage 18 est intégré au système d'électronique d'évitement 30.

Les premier et deuxième manches 20, 22 sont connus en soi et forment des organes primaires de commande de l'aéronef 10 qui sont manipulés par l'équipage 24 pour piloter l'aéronef.

Le premier manche 20, également appelé levier de pas collectif, est adapté pour commander la montée ou la descente de l'aéronef à voilure tournante 10 dans un plan vertical contenant la direction verticale Z et la direction longitudinale X.

Le deuxième manche 22, également appelé manche cyclique ou mini-manche est adapté pour commander une variation de l'assiette de l'aéronef à voilure tournante 10.

Le système d'électronique d'évitement 30 comprend une unité de traitement d'informations 32 formée par exemple d'une mémoire 34 et d'un processeur 36 associé à la mémoire 34.

Dans l'exemple de réalisation de la figure 1, le système électronique d'évitement 30 est distinct à la fois du système d'alerte 12 et du dispositif de pilotage automatique 16.

En variante non représentée, le système électronique d'évitement 30 est intégré au dispositif de pilotage automatique 16. L'écran d'affichage 18 correspond alors par exemple à un écran d'affichage, non représenté, du dispositif de pilotage automatique 16, et l'unité de traitement d'informations 32 correspond à une unité de traitement d'informations, non représentée, du dispositif de pilotage automatique 16.

La mémoire 34 est apte à stocker un logiciel 38 d'acquisition d'informations parmi les informations fournies par l'ensemble de capteurs 14, les informations d'alerte issues du système d'alerte 12, ainsi que d'éventuelles consignes fournies par le dispositif de pilotage automatique 16.

La mémoire 34 est également apte à stocker un logiciel 40 de détermination d'une ou de plusieurs consignes de vitesse IAS_cons, VZ_cons et/ou de cap CAP_cons.

La mémoire 34 est également apte à stocker un logiciel 42 de calcul d'une loi de guidage d'évitement de l'obstacle, le calcul de la loi de guidage étant effectué en fonction de la ou des consignes de vitesse et/ou de cap IAS_cons, VZ_cons, CAP_cons déterminées.

Par ailleurs, la mémoire 34 est apte à stocker un logiciel 44 de contrôle de l'affichage, sur l'écran 18, de données relatives à la loi de guidage d'évitement calculée.

Ces données affichées sur l'écran 18, visibles par l'équipage 24, constituent une aide permettant à l'équipage 24 d'effectuer une manoeuvre d'évitement manuelle par action sur l'un et/ou l'autre des deux organes primaires de commande 20, 22 de l'aéronef 10. Ces actions visent à ce que la ou les consignes IAS_cons, VZ_cons, CAP_cons déterminées soient atteintes par l'aéronef 10.

Egalement, la mémoire 34 est apte à stocker un logiciel 46 d'activation d'un mode de guidage automatique d'évitement par transmission au dispositif de pilotage automatique 16 de données relatives à la loi de guidage d'évitement calculée, afin de permettre la réalisation de la manoeuvre d'évitement de manière automatique par le dispositif de pilotage automatique 16.

Dans ce cas, le dispositif de pilotage automatique 16 agit automatiquement sur l'un et/ou l'autre des deux organes primaires de commande 20, 22 de l'aéronef 10, ces actions visant à ce que la ou les consignes IAS_cons, VZ_cons, CAP_cons déterminées soient atteintes par l'aéronef 10.

Les données transmises au dispositif de pilotage automatique 16 comportent, par exemple, une commande de variation d'assiette D_THETA_com, une commande de variation du levier de pas collectif D_COLL_com, et une commande de variation d'assiette latérale ou une commande de vitesse angulaire de lacet D_PSI_com.

Le processeur 36 est propre à charger et à exécuter chacun des logiciels 38, 40, 42, 44 et 46.

Le logiciel d'acquisition 38, le logiciel de détermination 40 d'une ou de plusieurs consignes de vitesse et/ou de cap et le logiciel de calcul 42 d'une loi de guidage d'évitement d'obstacle, forment respectivement des moyens d'acquisition 38 d'information, des moyens de détermination 40 d'une ou de plusieurs consignes de vitesse et/ou de cap et des moyens de calcul 42 d'une la loi de guidage d'évitement de l'obstacle.

Les moyens de détermination 40 d'une ou de plusieurs consignes de vitesse et/ou de cap, et les moyens de calcul 42 d'une la loi de guidage d'évitement de l'obstacle, forment plus généralement des moyens 40, 42 de détermination d'une loi de guidage d'évitement d'obstacle.

En variante, les moyens d'acquisition 38, les moyens de détermination 40 et les moyens de calcul 42 sont réalisés sous forme de composants logiques programmables, ou encore sous forme de circuits intégrés dédiés.

Le logiciel de contrôle 44 d'affichage et le logiciel d'activation 46 forment respectivement des moyens de contrôle 44 d'affichage de données à l'écran 18 et des moyens d'activation 46 du mode de guidage automatique d'évitement pour détermination d'une loi de guidage d'évitement et transmission des informations relatives à la loi de guidage déterminée au dispositif de pilotage automatique 16.

En variante, les moyens de contrôle d'affichage 44 et les moyens d'activation 46 sont réalisés sous forme de composants logiques programmables, ou encore sous forme de circuits intégrés dédiés.

Le logiciel d'acquisition 38 est, par exemple, adapté pour acquérir à la fois des valeurs des vitesses verticale et air mesurées VZ_mes, IAS_mes et des valeurs des accélérations verticale et longitudinale mesurées AZ_mes, AX_mes.

Le logiciel de détermination 40 est, par exemple, adapté pour calculer une consigne de vitesse verticale VZ_cons, une consigne de vitesse air IAS_cons, et une consigne de cap CAP_cons. La consigne de vitesse verticale VZ_cons comporte seulement une composante verticale selon la direction verticale Z, et la consigne de vitesse air IAS_cons comporte à la fois une composante verticale selon la direction verticale Z et une composante longitudinale selon la direction longitudinale X.

Dans l'exemple de réalisation décrit, chaque consigne de vitesse VZ_cons, IAS_cons, et de cap CAP_cons, comporte une valeur cible, la loi de guidage d'évitement étant calculée en fonction de la valeur courante et de la valeur cible, en sorte que ladite valeur courante converge vers la valeur cible selon une loi de convergence.

Le logiciel 46 d'activation est apte à faire passer l'aéronef 10 en mode de guidage automatique d'évitement d'un obstacle, dans le cas où aucune manoeuvre d'évitement manuelle, exécutée par l'équipage 24, n'est détectée pendant une durée supérieure à une première durée T déterminée à compter de l'émission d'une alerte par le système d'alerte 12, et si cette alerte est maintenue pendant la première durée T déterminée.

Dans une variante, les alertes générées par le système d'alerte 12 peuvent être de nature différente. Il peut s'agir par exemple d'alertes prédictives d'un premier type CAUTION, d'alertes prédictives d'un deuxième type WARNING, voire d'alertes prédictives d'un troisième type AVOID.

Dans cette variante, le logiciel 46 d'activation fait passer l'aéronef 10 en mode de guidage automatique d'évitement d'un obstacle, dans le cas où aucune manoeuvre d'évitement manuelle, exécutée par l'équipage 24, n'est détectée pendant une durée supérieure à la première durée T déterminée à compter de l'émission d'une alerte par le système d'alerte 12, si cette alerte est maintenue pendant la durée T, et uniquement si l'alerte en question est une alerte du deuxième type WARNING.

Eventuellement, une condition supplémentaire peut-être requise, qui est que l'alerte en question du deuxième type WARNING doit avoir été précédée de la génération par le système d'alerte 12 d'une alerte du premier type CAUTION.

L'activation du mode de guidage automatique, qui peut être obtenue par le logiciel d'activation 46 tel qu'expliqué plus haut, peut également être obtenue par action manuelle d'activation par l'équipage 24.

Le logiciel de calcul 42 est adapté pour calculer la loi de guidage d'évitement du ou des obstacles en fonction de la ou des consignes de vitesse, et/ou de cap, déterminées, par exemple en fonction de la consigne de vitesse verticale VZ_cons, de la consigne de vitesse air IAS_cons, et de la consigne de cap CAP_cons.

La loi de guidage calculée par le logiciel de calcul 42 comporte, par exemple, trois commandes, à savoir une première commande fonction de la consigne de vitesse air IAS_cons et de la vitesse air mesurée IAS_mes, une deuxième commande fonction de la consigne de vitesse verticale VZ_cons et de la vitesse verticale mesurée VZ_mes, et une troisième commande fonction de la consigne de cap CAP_cons et du cap mesuré CAP_mes (correspondant au cap courant de l'aéronef 10).

En complément, la loi de guidage calculée est fonction en outre, d'une part, de l'accélération verticale AZ, et d'autre part, de l'accélération longitudinale AX. La première commande est alors fonction de la consigne de vitesse air IAS_cons, de la vitesse air mesurée IAS_mes et de l'accélération longitudinale AX. De manière analogue, la deuxième commande est fonction de la consigne de vitesse verticale VZ_cons, de la vitesse verticale mesurée VZ_mes et de l'accélération verticale AZ.

Dans l'exemple de réalisation décrit où l'aéronef 10 est un aéronef à voilure tournante, la première commande est la commande de variation d'assiette D_THETA_com, la deuxième commande est la commande de variation du levier de pas collectif D_COLL_com, et la troisième commande est la commande de variation d'assiette latérale ou la commande de vitesse angulaire de lacet D_PSI_com.

La commande de variation d'assiette D_THETA_com vérifie par exemple l'équation suivante :

$$D\_THETA\_com = -K1 \times (IAS\_cons - IAS\_mes) + K2 \times AX\_mes \qquad (2)$$

où IAS_cons est la consigne de vitesse air,
IAS_mes est une vitesse air mesurée,
AX_mes est une accélération longitudinale mesurée, et
K1 et K2 sont des gains dépendant au moins de l'altitude et de la vitesse.

Le gain K1 est exprimé en degrés par m.s$^{-1}$, et est par exemple compris entre 1 degré par m.s$^{-1}$ et 6 degrés par m.s$^{-1}$, typiquement égal à 3 degrés par m.s$^{-1}$.

Le gain K2 est exprimé en degrés par m.s$^{-2}$, et est par exemple compris entre 0 degré par m.s$^{-2}$ et 12 degrés par m.s$^{-2}$, typiquement égal à 6 degrés par m.s$^{-2}$.

La commande de variation du levier de pas collectif D_COLL_com vérifie par exemple l'équation suivante :

$$D\_COLL\_com = K3 \times (VZ\_cons - VZ\_mes) - K4 \times AZ\_mes \qquad (3)$$

où VZ_cons est la consigne de vitesse verticale,
VZ_mes est une vitesse verticale mesurée,
AZ_mes est une accélération verticale mesurée, et
K3 et K4 sont des gains dépendant au moins de l'altitude et de la vitesse.

Le gain K3 est exprimé en % par m.s$^{-1}$, et est par exemple compris entre 1 % par m.s$^{-1}$ et 4 % par m.s$^{-1}$, typiquement égal à 2 % par m.s$^{-1}$.

Le gain K4 est exprimé en % par m.s$^{-2}$, et est par exemple compris entre 0 % par m.s$^{-2}$ et 4 % par m.s$^{-2}$, typiquement égal à 1 % par m.s$^{-2}$.

La commande de variation d'assiette latérale ou la commande de vitesse angulaire de lacet D_PSI_com vérifie par exemple l'équation suivante :

$$D\_PSI\_com = K5 \times (CAP\_cons - CAP\_mes) \qquad (4)$$

où CAP_cons est la consigne de cap,
CAP_mes est une cap courant ou mesuré,
K5 est un gain dépendant au moins de l'altitude et de la vitesse, exprimé en degré d'assiette latérale par degré de cap (pour une commande de variation d'assiette latérale), et par exemple compris entre 0.1 et 3, typiquement égal à 1.5.

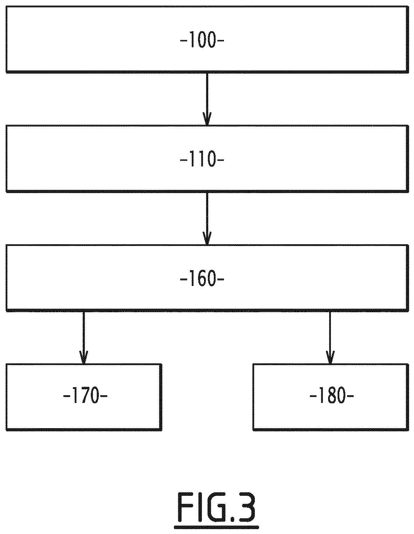

Le fonctionnement du système électronique d'évitement 30 selon l'invention va être à présent décrit à l'aide de la figure 3 représentant un organigramme du procédé d'évitement selon l'invention.

Lors d'une étape initiale 100, des valeurs des vitesses verticale et air VZ_mes, IAS_mes sont mesurées par l'ensemble de capteurs 14, puis acquises par le logiciel d'acquisition 38. Le logiciel d'acquisition 38 acquiert également les informations de cap courant CAP_mes, ainsi que les informations relatives aux alertes transmises par le système d'alerte 12.

En complément, des valeurs des accélérations verticales et longitudinale AZ_mes, AX_mes sont mesurées par l'ensemble de capteurs 14, puis acquises par le logiciel d'acquisition 38.

Ces différentes valeurs de vitesses et d'accélérations sont de préférence mesurées à un même instant temporel. Le logiciel de détermination 40 détermine ensuite, lors d'une étape 110, la consigne de vitesse verticale VZ_cons, la consigne de vitesse air IAS_cons, et la consigne de cap CAP_cons, notamment à l'aide des valeurs des vitesses verticale et air et de cap mesurées VZ_mes, IAS_mes, CAP_mes acquises précédemment.

Pour ce faire, les valeurs de vitesse courantes IAS_mes et VZ_mes sont comparées avec les valeurs de vitesse de référence IAS_ref et VZ_ref correspondantes, et la détermination de la consigne correspondante IAS_cons et VZ_cons dépend du résultat de la comparaison.

Ainsi, dans le cas de la détermination de la consigne de vitesse air IAS_cons, la vitesse air de référence IAS_ref peut être la vitesse air de meilleure montée Vy.

Cette vitesse air de meilleure montée Vy, visible sur la figure 2, est la vitesse air correspondant à une valeur minimale de la puissance totale requise pour faire voler l'aéronef 10, la puissance totale requise correspondant à la courbe 60 en trait gras sur la figure 2. Sur la figure 2, la courbe 62 représente la puissance induite utilisée pour sustenter l'aéronef 10, la courbe 64 représente la puissance parasite résultant des effets aérodynamiques du vent relatif sur l'aéronef 10 et la courbe 66 représente la puissance de profil résultant du travail des forces de trainée sur les pales, la puissance totale requise étant la somme de la puissance induite, de la puissance parasite et de la puissance de profil.

Si la consigne de vitesse air IAS_mes est inférieure à la vitesse de meilleure montée Vy, la valeur de la vitesse air mesurée IAS_mes est choisie comme nouvelle consigne de vitesse air IAS_cons. Sinon, la valeur de la vitesse de meilleure montée Vy est choisie comme nouvelle consigne de vitesse air IAS_cons.

Dans le cas de la détermination de la consigne de vitesse verticale VZ_cons, la vitesse verticale de référence VZ_ref peut être fonction de la nature de l'alerte, donc du type de l'alerte CAUTION, WARNING, etc... Par exemple, lorsque le niveau de l'alerte le justifie, la vitesse verticale de référence VZ_ref peut correspondre à la vitesse verticale de montée à puissance maximale, donc à la vitesse obtenue à la position maximale autorisée du levier de pas collectif 20.

Si la vitesse verticale mesurée VZ_mes est supérieure à la vitesse verticale de référence VZ_ref, la valeur de la vitesse verticale de référence est choisie comme nouvelle consigne de vitesse verticale VZ_cons. Sinon, la valeur de vitesse verticale mesurée VZ_ref est choisie comme nouvelle consigne de vitesse verticale VZ_cons.

On peut également prévoir la vérification de la compatibilité de la consigne de vitesse verticale VZ_cons ainsi déterminée avec une contrainte de pente minimale FPA_min, qui est fonction des caractéristiques de l'aéronef 10 notamment.

Ainsi, si la consigne de vitesse verticale VZ_cons déterminée n'est pas compatible avec cette contrainte de pente minimale FPA_min, une nouvelle consigne de pente verticale VZ_cons est calculée, compatible cette fois avec cette contrainte de pente minimale FPA_min.

S'il n'existe pas de contrainte de pente minimale FPA_min, on considère que la consigne de vitesse verticale est compatible par défaut.

Le calcul d'une nouvelle consigne de vitesse verticale VZ_cons compatible avec la contrainte de pente minimale FPA_min, peut aboutir à sélectionner comme nouvelle consigne de vitesse verticale VZ_cons la vitesse verticale la plus proche de la valeur courante ou valeur mesurée de la vitesse verticale VZ_mes, qui soit compatible avec la contrainte.

Dans le cas de la détermination de la consigne de cap CAP_cons, la valeur courante CAP_mes du cap de l'aéronef 10 est mesurée, et l'on vérifie sa compatibilité avec une éventuelle contrainte de cap.

Si la valeur de cap courante CAP_mes n'est pas compatible avec cette contrainte de cap, une nouvelle consigne de cap CAP_cons compatible avec cette contrainte est calculée. Sinon, la valeur courante du cap CAP_mes est utilisée comme nouvelle consigne de cap CAP_cons.

Le logiciel de calcul 42 calcule ensuite, lors de l'étape 160, visible sur la figure 3, la loi de guidage d'évitement de l'obstacle en fonction de la ou des consignes de vitesse et de cap déterminées. Dans l'exemple de réalisation décrit, le logiciel de calcul 42 calcule la commande de variation d'assiette D_THETA_com en fonction de la valeur de la consigne de vitesse air IAS_cons, de la vitesse air mesurée IAS_mes et de l'accélération longitudinale mesurée AX_mes suivant l'équation (2). Le logiciel de calcul 42 calcule également la commande de variation du levier de pas collectif D_COLL_com en fonction de la valeur de la consigne de vitesse verticale VZ_cons, de la vitesse verticale mesurée VZ_mes et de l'accélération verticale mesurée AZ_mes suivant l'équation (4). Le logiciel de calcul 42 calcule enfin la commande de variation d'assiette latérale ou la commande de vitesse angulaire de lacet D_PSI_com en fonction de la valeur de la consigne de cap CAP_cons, et de la valeur de cap mesurée CAP_mes suivant l'équation (5).

Après l'étape 160, et si le dispositif de pilotage automatique 16 est couplé au mode de guidage automatique d'évitement, le système électronique d'évitement 30 transmet selon l'étape 180, par l'intermédiaire du logiciel de transmission 46, les données relatives à la loi de guidage d'évitement calculée, au dispositif de pilotage automatique 16, afin que la manoeuvre d'évitement soit automatiquement effectuée par le dispositif de pilotage automatique 16. Le logiciel de transmission 46 transmet notamment les valeurs des commandes de variation d'assiette D_THETA_com, de levier de pas collectif D_COLL_com, et commande de variation d'assiette latérale ou la commande de vitesse angulaire de lacet D_PSI_com, calculées précédemment lors de l'étape 160.

Eventuellement, si le dispositif de pilotage automatique 16 n'est pas couplé au mode de guidage automatique d'évitement, le système électronique d'évitement 30 passe à l'étape 170 au cours de laquelle son logiciel d'affichage 44 gère l'affichage à l'écran 18 de données relatives à la loi de guidage d'évitement calculée, en vue de permettre une mise en oeuvre manuelle par l'équipage 24 de la manoeuvre d'évitement calculée.

Par ailleurs, à l'issue de l'étape 160, le système électronique d'évitement 30 retourne à l'étape 100 afin d'acquérir, via son logiciel d'acquisition 38, de nouvelles informations.

Après être retourné à l'étape 100, le système électronique d'évitement 30 passe à l'étape 110 afin de déterminer de nouvelles consignes.

Les valeurs cibles respectives VZ_cons, IAS_cons et CAP_cons sont, de préférence, modifiées seulement s'il y a une modification des données acquises. Autrement dit, les valeurs cibles respectives sont alors modifiées seulement s'il faut changer la manoeuvre d'évitement, par exemple suite à un nouvel obstacle, ou suite à une fin d'obstacle.

**Revendications**

1. Procédé d'évitement d'un ou plusieurs obstacles de terrain, par un aéronef (10) à voilure tournante, comprenant un système d'alerte (12) apte à générer des alertes (CAUTION, WARNING) en fonction notamment de la proximité du ou des obstacles de terrain et un système électronique d'évitement (30), le procédé étant mis en oeuvre par le système électronique d'évitement (30), le procédé comprenant l'étape suivante :

   a) génération d'une alerte (CAUTION, WARNING) par le système d'alerte (12) sur détection d'un obstacle de terrain,
   **caractérisé en ce qu'**il comprend en outre les étapes suivantes :
   b) si aucune manoeuvre d'évitement manuelle n'est détectée pendant une durée supérieure à une première durée (T) déterminée à compter de l'émission de l'alerte (CAUTION, WARNING) par le système d'alerte (12) et si l'alerte est maintenue pendant cette première durée (T), activation automatique d'un mode de guidage automatique d'évitement pour la détermination d'une loi de guidage d'évitement de l'obstacle de terrain, ladite détermination de la loi de guidage comprenant la détermination (110) d'au moins une consigne (IAS_cons, VZ_cons, CAP_cons) de vitesse et/ou de cap, et le calcul (160) de la loi de guidage d'évitement en fonction de la ou des consignes (IAS_cons, VZ_cons, CAP_cons) déterminées ; et
   c) si un dispositif de pilotage automatique (16) de l'aéronef (10) est couplé avec le mode de guidage automatique d'évitement, c'est-à-dire si le mode de guidage automatique est activé et transmet ses commandes au dispositif de pilotage automatique (16), transmission (180) au dispositif de pilotage automatique (16) de la loi de guidage d'évitement déterminée lors de l'étape b) pour effectuer de manière automatique une manoeuvre d'évitement de l'obstacle de terrain, par action sur l'un et/ou l'autre de deux organes primaires de commande (20, 22) de l'aéronef (10), visant à ce que la ou les consignes (IAS_cons, VZ_cons, CAP_cons) soient atteintes par l'aéronef (10),

   le système d'alerte (12) étant apte à générer des alertes d'au moins un premier (CAUTION) et un deuxième (WARNING) type, l'étape b) n'étant mise en oeuvre que dans le cas où l'alerte générée par le système d'alerte (12) est une alerte du deuxième type (WARNING)
   l'une des consignes déterminées étant une consigne de vitesse air ou vitesse sol (IAS_cons) comprenant une composante longitudinale perpendiculaire à un axe vertical, et la détermination (110) comprenant la comparaison de la vitesse air ou sol courante (IAS_mes) de l'aéronef (10) à une vitesse de meilleure montée (**Vy**), et la sélection, en tant que consigne de vitesse air ou sol (IAS_cons), de la vitesse air ou sol courante (IAS_mes) si la vitesse air ou sol courante (IAS_mes) est inférieure à la vitesse de meilleure montée (Vy), ou de la vitesse de meilleure montée (Vy) sinon.

2. Procédé selon la revendication 1, comprenant, si le dispositif de pilotage automatique (16) n'est pas couplé avec le mode de guidage automatique d'évitement, l'affichage (170) de la loi de guidage d'évitement déterminée lors de l'étape b) sur un dispositif d'affichage (18) de l'aéronef (10) visible par un équipage (24), pour fournir à l'équipage (24) une aide pour effectuer une manoeuvre d'évitement manuelle, par action sur l'un et/ou l'autre de deux organes primaires de commande (20, 22) de l'aéronef (10), visant à ce que la ou les consignes (IAS_cons, VZ_cons, CAP_cons) soient atteinte par l'aéronef (10).

3. Procédé selon la revendication 1 ou 2, dans lequel l'étape b) n'est mise en oeuvre que dans le cas où l'alerte du deuxième type (WARNING) générée par le système d'alerte (12) a été précédée de la génération d'une alerte du premier type (CAUTION) par le système d'alerte (12).

**4.** Procédé selon l'une quelconque des revendications 1 à 3, dans lequel l'activation du mode de guidage automatique d'évitement de l'étape b) peut être réalisée manuellement par l'équipage (24).

**5.** Procédé selon l'une quelconque des revendications 1 à 4, dans lequel la loi de guidage d'évitement comprend, pour au moins l'une des consignes (IAS_cons, VZ_cons, CAP_cons), une loi de convergence selon laquelle la valeur courante (IAS_mes, VZ_mes, CAP_mes) doit converger vers la consigne (IAS_cons, VZ_cons, CAP_cons) correspondante.

**6.** Procédé selon l'une quelconque des revendications 1 à 5, dans lequel la détermination de la loi de guidage comprend la mesure (100) de la valeur courante (IAS_mes, VZ_mes) de vitesse de l'aéronef (10) sur laquelle ou lesquelles on cherche à agir, et dans lequel la détermination (110) de la consigne (IAS_cons, VZ_cons) comprend la comparaison de cette ou de ces valeur(s) courante(s) (IAS_mes, VZ_mes) avec une ou des valeurs de référence (IAS_ref, VZ_ref) correspondantes et la détermination de la ou des consignes (IAS_cons, VZ_cons) en fonction de cette comparaison.

**7.** Procédé selon l'une quelconque des revendications 1 à 6, dans lequel l'une des consignes déterminées est une consigne de vitesse verticale (VZ_cons) comprenant une composante verticale, et la détermination (110) comprend la comparaison de la vitesse verticale courante (VZ_mes) de l'aéronef (10) à une valeur de vitesse verticale de référence (VZ_ref) fonction de la nature de l'alerte (CAUTION, WARNING), et la sélection, en tant que consigne de vitesse verticale (VZ_cons), de la vitesse verticale de référence (VZ_ref) si la vitesse verticale courante (VZ_mes) est inférieure à la vitesse verticale de référence (VZ_ref), ou de la vitesse verticale courante (VZ_mes) sinon.

**8.** Procédé selon la revendication 7, dans lequel la détermination (110) comprend la vérification de la compatibilité de la consigne de vitesse verticale (VZ_cons) déterminée avec une contrainte de pente minimale (FPA_min) fonction notamment de l'aéronef (10), et le calcul d'une nouvelle consigne de vitesse verticale (VZ_cons) compatible avec la contrainte de pente minimale (FPA_min) si la consigne de vitesse verticale (VZ_cons) déterminée n'est pas compatible avec cette contrainte de pente minimale (FPA_min).

**9.** Procédé selon l'une quelconque des revendications 1 à 8, dans lequel l'une des consignes déterminées est une consigne de cap (CAP_cons), dans lequel la détermination de la loi de guidage comprend la mesure (100) de la valeur courante (CAP_mes) de cap de l'aéronef (10) sur laquelle on cherche à agir, et dans lequel la détermination (110) de la consigne (CAP_cons) comprend la vérification de la compatibilité de la valeur de cap courante (CAP_mes) avec une contrainte de cap, et le calcul d'une consigne de cap (CAP_cons) compatible avec la contrainte de cap si la valeur courante (CAP_mes) n'est pas compatible avec cette contrainte de cap ou la sélection, en tant que consigne de cap (CAP_cons), de la valeur courante (CAP_mes) sinon.

**10.** Produit programme d'ordinateur comportant des instructions logicielles qui, lorsqu'elles sont mises en oeuvre par un ordinateur, mettent en oeuvre un procédé selon l'une quelconque des revendications précédentes.

**11.** Système électronique d'évitement (30) d'un ou plusieurs obstacles de terrain, par un aéronef (10) à voilure tournante, l'aéronef (10) comprenant un système d'alerte (12) apte à générer des alertes (CAUTION, WARNING) en fonction notamment de la proximité du ou des obstacles de terrain, le système électronique d'évitement (30) comprenant des moyens (40, 42) de détermination d'une loi de guidage d'évitement d'un obstacle de terrain signalé par une alerte (CAUTION, WARNING) générée par le système d'alerte (12), lesdits moyens (40, 42) de détermination d'une loi de guidage comprenant des moyens de détermination (40) d'au moins une consigne (IAS_cons, VZ_cons, CAP_cons) de vitesse et/ou de cap, et des moyens de calcul (42) de la loi de guidage d'évitement en fonction de la ou des consignes (IAS_cons, VZ_cons, CAP_cons) déterminées,
**caractérisé en ce qu'**il comprend en outre des moyens d'activation (46) aptes à :

(i) activer automatiquement, si aucune manoeuvre d'évitement manuelle n'est détectée pendant une durée supérieure à une première durée (T) déterminée, à compter de l'émission de l'alerte (CAUTION, WARNING) par le système d'alerte (12) et si l'alerte est maintenue pendant cette première durée (T), un mode de guidage automatique d'évitement d'obstacle de terrain pour détermination d'une loi de guidage d'évitement d'obstacle de terrain par les moyens (40, 42) de détermination,
(ii) transmettre, lorsqu'un dispositif de pilotage automatique (16) de l'aéronef (10) est couplé avec le mode de guidage automatique d'évitement, c'est-à-dire si le mode de guidage automatique est activé et transmet ses commandes au dispositif de pilotage automatique (16), la loi de guidage d'évitement calculée audit dispositif de pilotage automatique (16), pour effectuer de manière automatique une manoeuvre d'évitement de l'obstacle de terrain, par action sur l'un et/ou l'autre de deux organes primaires de commande (20, 22) de l'aéronef (10), visant à ce que la ou les consignes (IAS_cons, VZ_cons, CAP_cons) soient atteinte par l'aéronef (10),

le système d'alerte (12) étant apte à générer des alertes d'au moins un premier (CAUTION) et un deuxième (WARNING) type, l'activation automatique n'étant mise en oeuvre que dans le cas où l'alerte générée par le système d'alerte (12) est une alerte du deuxième type (WARNING)

l'une des consignes déterminées étant une consigne de vitesse air ou vitesse sol (IAS_cons) comprenant une composante longitudinale perpendiculaire à un axe vertical, et la détermination (110) comprenant la comparaison de la vitesse air ou sol courante (IAS_mes) de l'aéronef (10) à une vitesse de meilleure montée (**Vy**), et la sélection, en tant que consigne de vitesse air ou sol (IAS_cons), de la vitesse air ou sol courante (IAS_mes) si la vitesse air ou sol courante (IAS_mes) est inférieure à la vitesse de meilleure montée (**Vy**), ou de la vitesse de meilleure montée (Vy) sinon.

**12.** Système selon la revendication 11, comprenant des moyens de contrôle (44) de l'affichage sur un dispositif d'affichage (18) de l'aéronef (10) visible par un équipage (24), aptes, si le dispositif de pilotage automatique (16) n'est pas couplé au mode de guidage automatique d'évitement, à afficher sur le dispositif d'affichage (18), la loi de guidage d'évitement calculée, pour fournir à l'équipage (24) une aide pour effectuer une manoeuvre d'évitement manuelle, par action sur l'un et/ou l'autre de deux organes primaires de commande (20, 22) de l'aéronef (10), visant à ce que la ou les consignes (IAS_cons, VZ_cons, CAP_cons) soient atteintes par l'aéronef (10).

**13.** Aéronef (10),à voilure tournante, comprenant un système d'alerte (12) apte à générer des alertes (CAUTION, WARNING) en fonction notamment de la proximité d'un ou plusieurs obstacles de terrain, et un système électronique d'évitement (30) du ou des obstacles de terrain par l'aéronef (10), **caractérisé en ce que** le système d'évitement (30) est conforme à l'une quelconque des revendications 11 et 12.

## Patentansprüche

**1.** Verfahren zum Ausweichen vor einem oder mehreren Geländehindernissen durch ein Drehflügel-Luftfahrzeug (10) aufweisend ein Warnsystem (12), das in der Lage ist, Warnungen (CAUTION, WARNING) in Abhängigkeit insbesondere von der Nähe des oder der Geländehindernisse zu erzeugen, und ein elektronisches Ausweichsystem (30), wobei das Verfahren durch das elektronische Ausweichsystem (30) durchgeführt wird, wobei das Verfahren den folgenden Schritt aufweist:

a) Erzeugen einer Warnung (CAUTION, WARNING) durch das Warnsystem (12) beim Detektieren eines Geländehindernisses,

**dadurch gekennzeichnet, dass** es ferner die folgenden Schritte aufweist:

b) wenn kein manuelles Ausweichmanöver während einer Dauer detektiert wird, die größer als eine bestimmte erste Dauer (T) ab dem Ausgeben der Warnung (CAUTION, WARNING) durch das Warnsystem (12) ist, und wenn die Warnung während dieser ersten Dauer (T) aufrechterhalten wird, automatisches Aktivieren eines automatischen Ausweichführungsmodus zum Bestimmen einer Führungsregel zum Ausweichen vor dem Geländehindernis, wobei das Bestimmen der Führungsregel das Bestimmen (110) mindestens eines Geschwindigkeits- und/oder Kurs-Sollwertes (IAS_cons, VZ_cons, CAP_cons) und das Berechnen (160) der Führungsregel zum Ausweichen in Abhängigkeit von dem oder den bestimmten Sollwerten (IAS_cons, VZ_cons, CAP_cons) aufweist, und

c) wenn eine automatische Steuervorrichtung (16) des Luftfahrzeugs (10) mit dem automatischen Ausweichführungsmodus verbunden ist, das heißt wenn der automatische Führungsmodus aktiviert ist und seine Befehle an die automatische Steuervorrichtung (16) übermittelt, Übermitteln (180) an die automatische Steuervorrichtung (16) der im Schritt b) bestimmten Führungsregel zum Ausweichen, um auf automatische Weise ein Manöver zum Ausweichen vor dem Geländehindernis durchzuführen, durch Einwirken auf die eine und/oder die andere von zwei Hauptsteuereinrichtungen (20, 22) des Luftfahrzeugs (10), darauf abzielend, dass der oder die Sollwerte (IAS_cons, VZ_cons, CAP_cons) von dem Luftfahrzeug (10) erreicht werden,

wobei das Warnsystem (12) in der Lage ist, Warnungen von mindestens einem ersten (CAUTION) und einem zweiten (WARNING) Typ zu erzeugen, wobei der Schritt b) nur in dem Fall durchgeführt wird, in dem die durch das Warnsystem (12) erzeugte Warnung eine Warnung des zweiten Typs (WARNING) ist,

wobei der eine der bestimmten Sollwerte ein Luftgeschwindigkeits- oder Bodengeschwindigkeits-Sollwert (IAS_cons) ist, der eine Longitudinalkomponente senkrecht zu einer vertikalen Achse aufweist, und das Bestimmen (110) das Vergleichen der aktuellen Luft- oder Bodengeschwindigkeit (IAS_mes) des Luftfahrzeugs (10) mit einer besten Steiggeschwindigkeit (**Vy**) und das Auswählen aufweist, als Luft- oder Bodengeschwindigkeits-Sollwert (IAS_cons), der aktuellen Luft- oder Bodengeschwindigkeit (IAS_mes), wenn die aktuelle Luft- oder Bodengeschwindigkeit (IAS_mes) kleiner als die beste Steiggeschwindigkeit (**Vy**) ist, oder andernfalls der besten Steiggeschwindigkeit (**Vy**).

2. Verfahren gemäß Anspruch 1, aufweisend, wenn die automatische Steuervorrichtung (16) nicht mit dem automatischen Ausweichführungsmodus verbunden ist, das Anzeigen (170) der Führungsregel zum Ausweichen, die im Schritt b) bestimmt wird, auf einer Anzeigevorrichtung (18) des Luftfahrzeugs (10), die für eine Besatzung (24) sichtbar ist, um der Besatzung (24) eine Unterstützung zum Durchführen eines manuellen Ausweichmanövers durch Einwirken auf die eine und/oder die andere der beiden Hauptsteuereinrichtungen (20, 22) des Luftfahrzeugs (10) bereitzustellen, darauf abzielend, dass der oder die Sollwerte (IAS_cons, VZ_cons, CAP_cons) durch das Luftfahrzeug (10) erreicht wird/werden.

3. Verfahren gemäß Anspruch 1 oder 2, wobei der Schritt b) nur in dem Fall durchgeführt wird, in dem der Warnung des zweiten Typs (WARNING), die von dem Warnsystem (12) erzeugt wurde, das Erzeugen einer Warnung des ersten Typs (CAUTION) durch das Warnsystem (12) vorangegangen ist.

4. Verfahren gemäß irgendeinem der Ansprüche 1 bis 3, wobei das Aktivieren des automatischen Ausweichführungsmodus des Schrittes b) von der Besatzung (24) manuell durchgeführt werden kann.

5. Verfahren gemäß irgendeinem der Ansprüche 1 bis 4, wobei die Führungsregel zum Ausweichen für mindestens einen der Sollwerte (IAS_cons, VZ_cons, CAP_cons) eine Konvergenzregel aufweist, gemäß welcher der aktuelle Wert (IAS_mes, VZ_mes, CAP_mes) in Richtung zu dem korrespondierenden Sollwert (IAS_cons, VZ_cons, CAP_cons) konvergieren soll.

6. Verfahren gemäß irgendeinem der Ansprüche 1 bis 5, wobei das Bestimmen der Führungsregel aufweist das Messen (100) des aktuellen Geschwindigkeitswertes (IAS_mes, VZ_mes) des Luftfahrzeugs (10), auf den oder die eingewirkt werden soll, und wobei das Bestimmen (110) des Sollwertes (IAS_cons, VZ_cons) aufweist das Vergleichen dieses aktuellen Wertes / dieser aktuellen Werte (IAS_mes, VZ_mes) mit einem korrespondierenden oder korrespondierenden Referenzwerten (IAS_ref, VZ_ref) und das Bestimmen des oder der Sollwerte (IAS_cons, VZ_cons) in Abhängigkeit von diesem Vergleich.

7. Verfahren gemäß irgendeinem der Ansprüche 1 bis 6, wobei einer der bestimmten Sollwerte ein Vertikalgeschwindigkeit-Sollwert (VZ_cons) ist, der eine Vertikalkomponente aufweist, und das Bestimmen (110) das Vergleichen der aktuellen Vertikalgeschwindigkeit (VZ_mes) des Luftfahrzeugs (10) mit einem Vertikalgeschwindigkeit-Referenzwert (VZ_ref) in Abhängigkeit von der Art der Warnung (CAUTION, WARNING) und das Auswählen als Vertikalgeschwindigkeit-Sollwert (VZ_cons) der Vertikal-Referenzgeschwindigkeit (VZ_ref), wenn die aktuelle Vertikalgeschwindigkeit (VZ_mes) kleiner als die Vertikal-Referenzgeschwindigkeit (VZ_ref) ist, oder andernfalls der aktuellen Vertikalgeschwindigkeit (VZ_mes) aufweist.

8. Verfahren gemäß Anspruch 7, wobei das Bestimmen (110) aufweist das Verifizieren der Kompatibilität des bestimmten Vertikalgeschwindigkeit-Sollwerts (VZ_cons) mit einer minimalen Steigbeschränkung (FPA_min) insbesondere in Abhängigkeit vom Luftfahrzeug (10), und das Berechnen eines neuen Vertikalgeschwindigkeit-Sollwerts (VZ_cons), der mit der minimalen Steigbeschränkung (FPA_min) kompatibel ist, wenn der bestimmte Vertikalgeschwindigkeit-Sollwert (VZ_cons) mit dieser minimalen Steigbeschränkung (FPA_min) nicht kompatibel ist.

9. Verfahren gemäß irgendeinem der Ansprüche 1 bis 8, wobei einer der bestimmten Sollwerte ein Kurssollwert (CAP_cons) ist, wobei das Bestimmen der Führungsregel das Messen (100) des aktuellen Kurswertes (CAP_mes) des Luftfahrzeugs (10), auf den eingewirkt werden soll, aufweist, und wobei das Bestimmen (110) des Sollwertes (CAP_cons) das Verifizieren der Kompatibilität des aktuellen Kurswertes (CAP_mes) mit einer Kursbeschränkung und das Berechnen eines Kurssollwertes (CAP_cons), der mit der Kursbeschränkung kompatibel ist, wenn der aktuelle Wert (CAP_mes) nicht mit dieser Kursbeschränkung kompatibel ist, oder andernfalls das Auswählen des aktuellen Wertes (CAP_mes) als Kurssollwert (CAP_cons) aufweist.

10. Computerprogrammprodukt, aufweisend Softwarebefehle, die, wenn sie durch einen Computer ausgeführt werden, ein Verfahren gemäß irgendeinem der vorhergehenden Ansprüche durchführen.

**11.** Elektronisches System zum Ausweichen (30) vor einem oder mehreren Geländehindernissen durch ein Drehflügel-Luftfahrzeug (10), wobei das Luftfahrzeug (10) ein Warnsystem (12) aufweist, das in der Lage ist, Warnungen (CAUTION, WARNING) in Abhängigkeit insbesondere von der Nähe des oder der Geländehindernisse zu erzeugen, wobei das elektronische Ausweichsystem (30) Mittel (40, 42) zum Bestimmen einer Führungsregel zum Ausweichen vor einem Geländehindernis aufweist, das durch eine Warnung (CAUTION WARNING) signalisiert wird, die von dem Warnsystem (12) erzeugt wird, wobei die Mittel (40, 42) zum Bestimmen einer Führungsregel Mittel zum Bestimmen (40) mindestens eines Geschwindigkeits- und/oder Kurssollwerts (IAS_cons, VZ_cons, CAP_cons) und Mittel zum Berechnen (42) der Führungsregel zum Ausweichen in Abhängigkeit von dem oder den bestimmten Sollwerten (IAS_cons, VZ_cons, CAP_cons) aufweisen,
**dadurch gekennzeichnet, dass** es ferner Aktivierungsmittel (46) aufweist, die in der Lage sind zum:

(i) automatischen Aktivieren, wenn während einer Dauer, die größer als eine bestimmte erste Dauer (T) ab dem Ausgeben der Warnung (CAUTION, WARNING) durch das Warnsystem (12) ist, kein manuelles Ausweichmanöver detektiert wird, und wenn die Warnung während dieser ersten Dauer (T) aufrechterhalten wird, eines automatischen Führungsmodus zum Ausweichen vor einem Geländehindernis zum Bestimmen einer Führungsregel zum Ausweichen vor einem Geländehindernis durch die Mittel (40, 42) zum Bestimmen,
(ii) Übermitteln, wenn eine automatische Steuervorrichtung (16) des Luftfahrzeugs (10) mit dem automatischen Ausweichführungsmodus verbunden ist, das heißt wenn der automatische Führungsmodus aktiviert ist und seine Befehle an die automatische Steuervorrichtung (16) übermittelt, der berechneten Führungsregel zum Ausweichen an die automatische Steuervorrichtung (16), um auf automatische Weise ein Manöver zum Ausweichen vor dem Geländehindernis durchzuführen, durch Einwirken auf die eine und/oder die andere von zwei Hauptsteuereinrichtungen (20, 22) des Luftfahrzeugs (10), darauf abzielend, dass der oder die Sollwerte (IAS_cons, VZ_cons, CAP_cons) von dem Luftfahrzeug (10) erreicht werden,

wobei das Warnsystem (12) in der Lage ist, Warnungen von mindestens einem ersten (CAUTION) und einem zweiten (WARNING) Typ zu erzeugen, wobei das automatische Aktivieren nur in dem Fall durchgeführt wird, in dem die durch das Warnsystem (12) erzeugte Warnung eine Warnung des zweiten Typs (WARNING) ist,
wobei der eine der bestimmten Sollwerte ein Luftgeschwindigkeits- oder Bodengeschwindigkeits-Sollwert (IAS_cons) ist, der eine Longitudinalkomponente senkrecht zu einer vertikalen Achse aufweist, und das Bestimmen (110) das Vergleichen der aktuellen Luft- oder Bodengeschwindigkeit (IAS_mes) des Luftfahrzeugs (10) mit einer besten Steiggeschwindigkeit (**Vy**) und das Auswählen aufweist, als Luft- oder Bodengeschwindigkeits-Sollwert (IAS_cons), der aktuellen Luft- oder Bodengeschwindigkeit (IAS_mes), wenn die aktuelle Luft- oder Bodengeschwindigkeit (IAS_mes) kleiner als die beste Steiggeschwindigkeit (**Vy**) ist, oder andernfalls der besten Steiggeschwindigkeit (**Vy**).

**12.** System gemäß Anspruch 11, aufweisend Mittel zum Steuern (44) der Anzeige auf einer Anzeigevorrichtung (18) des Luftfahrzeugs (10), die für eine Besatzung (24) sichtbar ist, die in der Lage sind, wenn die automatische Steuervorrichtung (16) nicht mit dem automatischen Ausweichführungsmodus verbunden ist, auf der Anzeigevorrichtung (18) die berechnete Führungsregel zum Ausweichen anzuzeigen, um der Besatzung (24) eine Unterstützung bereitzustellen, um ein manuelles Ausweichmanöver durchzuführen, durch Einwirken auf die eine und/oder die andere von zwei Hauptsteuereinrichtungen (20, 22) des Luftfahrzeugs (10), darauf abzielend, dass der oder die Sollwerte (IAS_cons, VZ_cons, CAP_cons) von dem Luftfahrzeug (10) erreicht werden.

**13.** Drehflügel-Luftfahrzeug (10), aufweisend ein Warnsystem (12), das in der Lage ist, Warnungen (CAUTION, WARNING) in Abhängigkeit insbesondere von der Nähe von einem oder mehreren Geländehindernissen zu erzeugen, und ein elektronisches System zum Ausweichen (30) vor dem oder den Geländehindernissen durch das Luftfahrzeug (10), **dadurch gekennzeichnet, dass** das System zum Ausweichen (30) irgendeinem der Ansprüche 11 und 12 entspricht.

**Claims**

**1.** A method for the avoidance of one or more terrain obstacles by a rotary-wing aircraft (10), comprising a warning system (12) capable of generating alerts (CAUTION, WARNING) as a function in particular of the proximity of the terrain obstacle(s), and an electronic avoidance system (30), the method being implemented by the electronic avoidance system (30), the method comprising the following step:

a) generating an alert (CAUTION, WARNING) by the warning system (12) on detection of a terrain obstacle,

**characterized in that** it further comprises the following steps:

b) if no manual avoidance manoeuver is detected for a time longer than a first determined time (T) effective from issue of the alert (CAUTION, WARNING) by the warning system (12) and if the alert is maintained during this first period of time (T), automatic activation of an automatic avoidance guide mode to determine a terrain obstacle-avoidance guidance law, said determination of the guidance law comprising the determination (110) of at least one speed and/or heading set-point (IAS_cons, VZ_cons, CAP_cons) and the computing (160) of the avoidance guidance law as a function of the determined set-point(s) (IAS_cons, VZ cons, CAP cons); and
c) if an autopilot device (16) of the aircraft (10) is coupled to the automatic avoidance guide mode, that is to say if said automatic avoidance guide mode is activated and transmits its commands to the autopilot device (16), transmission (180) to the autopilot device (16) of the avoidance guidance law determined at step b) for automatic performing of a manoeuver to avoid the obstacle by action on one and/or the other of two primary control members (20, 22) of the aircraft (10) causing the aircraft (10) to reach the set-point(s) (IAS_cons, VZ cons, CAP cons),

the warning system (12) being capable of generating alerts of at least a first (CAUTION) and second (WARNING) type, step b) only being implemented in the event that the alert generated by the warning system (12) is an alert of second type (WARNING)
one of the determined set-points is an air speed or ground speed set-point (IAS_cons) comprising a longitudinal component perpendicular to a vertical axis, and determination (110) comprises comparing the current air or ground speed (IAS_mes) of the aircraft (10) with the best climb speed (Vy) and selecting the current air or ground speed (IAS_mes) as air or ground speed set-point (IAS_cons) if the current air or ground speed (IAS_mes) is lower than the best climb speed (Vy), and if not selecting the best climb speed (Vy).

2. The method according to claim 1 which, if the autopilot device (16) is not coupled to the automatic avoidance guide mode, comprises the display (170) of the avoidance guidance law determined at step b) on a display device (18) of the aircraft visible to the crew (24), to provide the crew (24) with assistance to carry out a manual avoidance manoeuver by action on one and/or the other of two primary control members (20, 22) of the aircraft (10) causing the aircraft (10) to reach the set-point(s) (IAS_cons, VZ_cons, CAP_cons).

3. The method according to claim 1 or 2 wherein step b) is only implemented in the event that the alert of second type (WARNING) generated by the warning system (12) is preceded by the generation of an alert of first type (CAUTION) by the warning system (12).

4. The method according to any of claims 1 to 3 wherein activation of the automatic avoidance guide mode at step b) can be performed manually by the crew (24).

5. The method according to any of claims 1 to 4 wherein the avoidance guidance law, for at least one of the set-points (IAS_cons, VZ cons, CAP_cons), comprises a convergence law whereby the current value (IAS_mes, VZ_mes, CAP_mes) must converge towards the corresponding set-point (IAS_cons, VZ cons, CAP cons).

6. The method according to any of claims 1 to 5 wherein the determination of the guidance law comprises measurement (100) of the current value (IAS_mes, VZ_mes) of the speed of the aircraft (10) on which it is sought to act, and wherein the determination (110) of the set-point (IAS_cons, VZ cons) comprises the comparison of this or these current values (IAS_mes, VZ_mes) with one or more corresponding reference values (IAS_ref, VZ_ref) and determination of the set-point(s) (IAS_cons, VZ cons) as a function of this comparison.

7. The method according to any of claims 1 to 6, wherein one of the determined set-points is a vertical speed set-point (VZ_cons) comprising a vertical component, and determination (110) comprises comparing the current vertical speed (VZ_mes) of the aircraft (10) with a reference vertical speed value (VZ_ref) as a function of the type of alert (CAUTION, WARNING), and selecting the reference vertical speed (VZ_ref) as vertical speed set-point (VZ_cons) if the current vertical speed (VZ_mes) is lower than the reference vertical speed (VZ_ref), and if not selecting the current vertical speed (VZ_mes).

8. The method according to claim 7, wherein determination (110) comprises verification of the compatibility of the determined vertical speed set-point c (VZ_cons) with a minimum flight path angle (FPA_min) that is a function of the aircraft (10) in particular, and the computing of a new vertical speed set-point (VZ_cons) compatible with the minimum flight path angle (FPA_min) if the determined vertical speed set-point (VZ_cons) is not compatible with this minimum flight path angle (FPA_min).

9. The method according to any of claims 1 to 8, wherein one of the determined set-points is a heading set-point (CAP_cons), wherein the determination of the guidance law comprises measurement (100) of the current heading value (CAP_mes) of the aircraft (10) on which it is sought to act, and wherein the determination (110) of the set-point (CAP_cons) comprises verification of the compatibility of the current heading value (CAP_mes) with a heading constraint, and the computing of a new heading set-point (CAP_cons) compatible with the heading constraint if the current value (CAP_mes) is not compatible with this heading constraint, otherwise the selecting of the current value (CAP_mes) as heading set-point (CAP_cons).

10. A computer program product comprising software instructions which, when executed on a computer, implement a method according to any of the preceding claims.

11. An electronic avoidance system (30) of one or more terrain obstacles by a rotary-wing aircraft (10), comprising a warning system (12) capable of generating alerts (CAUTION, WARNING) as a function in particular of the proximity of the one or more terrain obstacles, the electronic avoidance system (30) comprising means (40, 42) to determine a guidance law for avoidance of a terrain obstacle indicated by an alert (CAUTION, WARNING) generated by the warning system (12), said means (40, 42) to determine a guidance law comprising means (40) to determine at least one speed and/or heading set-point (IAS_cons, VZ cons, CAP cons), and means (42) to compute the avoidance guidance law as a function of the determined set-point(s) (IAS_cons, VZ_cons, CAP_cons),
**characterized in that** it further comprises activation means (46) capable of:

(i) automatically - if no manual avoidance manoeuver is detected for a time longer than a first determined time (T) effective from issue of the alert (CAUTION, WARNING) by the warning system (12) and if the alert is maintained during this first period of time (T) - activating an automatic terrain obstacle-avoidance guide mode for determination of a terrain obstacle-avoidance guidance law by the determination means (40, 42);
(ii) transmitting the computed avoidance guidance law to said autopilot (16) - if an autopilot device (16) of the aircraft (10) is coupled to the automatic avoidance guide mode that is to say if said automatic avoidance guide mode is activated and transmits its commands to the autopilot device (16), - for automatic performing of an avoidance manoeuver of the obstacle by action on one and/or the other of two primary control members (20, 22) of the aircraft (10), to cause the aircraft (10) to reach the set-point(s) (IAS_cons, VZ_cons, CAP_cons),

the warning system (12) being capable of generating alerts of at least a first (CAUTION) and second (WARNING) type, automatic activation only being implemented in the event that the alert generated by the warning system (12) is a second type alert (WARNING)
one of the determined set-points is an air speed or ground speed set-point (IAS_cons) comprising a longitudinal component perpendicular to a vertical axis, and determination (110) comprises comparing the current air or ground speed (IAS_mes) of the aircraft (10) with the best climb speed (Vy) and selecting the current air or ground speed (IAS_mes) as air or ground speed set-point (IAS_cons) if the current air or ground speed (IAS_mes) is lower than the best climb speed (Vy), and if not selecting the best climb speed (Vy).

12. The system according to claim 11, comprising means (44) to control display on a display device (18) of the aircraft (10) visible by the crew (24) which, if the autopilot device (16) is not coupled to the automatic avoidance guide mode, are capable of displaying on the display device (18) the computed avoidance guidance law to provide the crew (24) with assistance to carry out a manual avoidance manoeuver by action on one and/or the other of two primary control members (20, 22) of the aircraft (10), to cause the aircraft (10 to reach the set-point(s) (IAS_cons, VZ cons, CAP cons).

13. A rotary-wing aircraft (10), comprising a warning system (12) capable of generating alerts (CAUTION, WARNING) as a function in particular of the proximity of one or more terrain obstacles, and an electronic system (30) for avoidance by the aircraft (10) of the one or more terrain obstacles, **characterized in that** the avoidance system (30) conforms to either of claims 11 and 12.

FIG.1

FIG.2

FIG.3

**RÉFÉRENCES CITÉES DANS LA DESCRIPTION**

**Documents brevets cités dans la description**

- EP 1859428 B1

- FR 2938683